(19) Europäisches Patentamt
European Patent Office
Office européen des brevets

(11) Veröffentlichungsnummer: **0 338 191 A2**

# (12) EUROPÄISCHE PATENTANMELDUNG

(21) Anmeldenummer: **89101082.9**

(22) Anmeldetag: **23.01.89**

(51) Int. Cl.⁴: **C07F 9/09 , C08G 65/32 , C11D 1/34**

(30) Priorität: **16.04.88 DE 3812718**

(43) Veröffentlichungstag der Anmeldung: **25.10.89 Patentblatt 89/43**

(84) Benannte Vertragsstaaten: **AT BE CH DE ES FR GB GR IT LI LU NL SE**

(71) Anmelder: **Henkel Kommanditgesellschaft auf Aktien**
**Postfach 1100 Henkelstrasse 67**
**D-4000 Düsseldorf 1(DE)**

(72) Erfinder: **Fabry, Bernd, Dr.**
**Danziger Strasse 31**
**D-4052 Korschenbroich(DE)**
Erfinder: **Friese, Hans-Herbert, Dr.**
**Schiesshecke 53**
**D-4019 Monheim(DE)**
Erfinder: **Pieper, Friedrich**
**Zehntenweg 10**
**D-4018 Langenfeld(DE)**
Erfinder: **Uphues, Günter**
**Robert-Koch-Strasse 45**
**D-4019 Monheim(DE)**

## (54) Oberflächenaktive, gesättigte Sulfophosphorsäure(partial)alkylester.

(57) Die Erfindung betrifft ein Verfahren zur Herstellung oberflächenaktiver, gesättigter Sulfophosphorsäure-(partial)alkylester und deren Alkali-, Erdalkali-, Ammonium- und/oder Aminsalze.

EP 0 338 191 A2

Xerox Copy Centre

# Oberflächenaktive, gesättigte Sulfophosphorsäure(partial)alkylester

Die Erfindung betrifft ein Verfahren zur Herstellung oberflächenaktiver, gesättigter Sulfophosphorsäure(partial)alkylester und deren Alkali-, Erdalkali-, Ammonium- und/oder Aminsalze durch Sulfonierung gesättigter Phosphorsäure(partial)alkylester und Hydrolyse der gebildeten sulfonierten Phosphorsäureester.

Während die Verwendung von Phosphaten und Phosphonaten als Builder in Waschmittelrezepturen weit verbreitet ist, werden Phosphorverbindungen als Tenside bislang nur in untergeordnetem Maße eingesetzt.

Die Synthese phosphorhaltiger Tenside durch Umsetzung von gesättigten α-Brom-Fettsäureestern mit Triethylphosphit wurde bereits vor mehr als 20 Jahren von Maurer et.al. in J. Am. Oil Chem. Soc. 41, 205 (1964) beschrieben. Die gebildeten α-Phosphono-Fettsäureester weisen jedoch nur durchschnittliche oberflächenaktive Eigenschaften auf. In jüngster Zeit wurde die Herstellung von Alkylphosphinaten durch Umsetzung von α-Olefinen mit phosphoriger oder hypophosphoriger Säure bekannt (C. Herranz in J. Am. Oil Chem. Soc. 64, 1038 (1987). Auch diese Substanzen besitzen nur ein mäßiges Wasch- und Schaumvermögen.

Im Gegensatz zu diesen von Maurer und Herranz beschriebenen Tensiden, bei denen Phosphor direkt mit einer Kohlenstoffkette verknüpft ist, weisen Phosphorsäureester mit P-O-C-Bindungen deutlich verbesserte Tensideigenschaften auf. So ist beispielsweise bekannt, daß Alkylphosphate als Netzmittel, Antistatika, Emulgatoren sowie in Wasch- und Reinigungsmitteln Verwendung finden (A. J. OLenick, W. C. Smith in Soap. Cosm. Chem. Spec. 7, 26 (1986)). Diese Substanzen besitzen jedoch nur ein geringes Schaumvermögen, sind wenig härtebeständig und zum Teil schlecht wasserlöslich.

Aus Acta Polym. 38, 5 (1987) ist ferner die Verwendung von Alkylphosphaten, hergestellt durch Umsetzung von Alkoholen bzw. Alkoholpolyoxialkylethern mit $POCl_3$ als Antistatika für Synthesefasern bekannt.

Die Aufgabe der Erfindung bestand darin, die oberflächenaktiven Eigenschaften, die Wasserlöslichkeit sowie die Härtebeständigkeit, insbesondere langkettiger Alkylphosphate, zu verbessern.

Die Erfindung geht von der überraschenden Feststellung aus, daß sich sulfonatgruppenhaltige gesättigte Phosphorsäure(partial)alkylester durch deutlich verbesserte Tensideigenschaften, eine bessere Wasserlöslichkeit sowie eine verbesserte Härtebeständigkeit auszeichnen.

Gegenstand der Erfindung ist dementsprechend ein Verfahren zur Herstellung oberflächenaktiver, gesättigter Sulfophosphorsäure(partial)alkylester und deren Alkali-, Erdalkali-, Ammonium-und/oder Aminsalzen, welches dadurch gekennzeichnet ist, daß man gesättigte Alkyl-, gesättigte Alkyl/gesättigte Alkylpolyoxyalkyl- und/oder gesättigte Alkylpolyoxyalkylphosphate mit Jodzahlen zwischen 0 und kleiner 10, die der allgemeinen Formel I

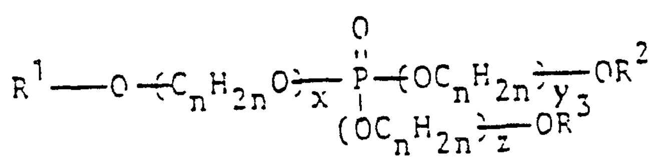

entsprechen, in welcher $R^1$ eine Alkylgruppe mit 8 bis 22 C-Atomen oder eine überwiegend aus Octyl-, Decyl-, Lauryl-, Myristyl-, Cetyl-, Stearyl- und/oder Behenylgruppen bestehende Fettalkylgruppe bedeutet, die Reste $R^2$ und $R^3$ gleich oder ungleich sind und Wasserstoff, eine Alkylgruppe mit 8 bis 22 C-Atomen oder eine überwiegend aus Octyl-, Decyl-, Lauryl-, Myristyl-, Cetyl-, Stearyl- und/oder Behenylgruppen bestehende Fettalkylgruppe bedeuten, n eine Zahl von 2 bis 4 ist, die Indizes x, y und z gleich oder ungleich sind und eine Zahl von 0 bis 30 bedeuten, mit Sulfonierungsmitteln umsetzt und die Umsetzungsprodukte mit wäßrigen Lösungen von 1 bis 1,5 Mol Alkalihydroxiden, Erdalkalihydroxiden, Ammoniumhydroxiden und/oder Aminen oder mit 1 bis 1,5 Mol wasserfreien Aminen pro Mol angelagertem $SO_3$ hydrolysiert.

Gesättigte Sulfophoshorsäure(partial)alkylester mit besonders günstigen oberflächenaktiven Eigenschaften werden erhalten, wenn zur Sulfonierung gesättigte Phosphorsäure(partial)alkylester der allgemeinen Formel I, in welcher der Rest $R^1$ eine Alkylgruppe mit 12 bis 18 Kohlenstoffatomen oder eine überwiegend aus Lauryl-, Myristyl-, Cetyl- und/oder Stearylgruppen bestehende Fettalkylgruppe bedeutet, die Reste $R^2$ und $R^3$ gleich oder ungleich sind und Wasserstoff, eine Alkylgruppe mit 12 bis 18 Kohlenstoffatomen oder eine überwiegend aus Lauryl-, Myristyl-, Cetyl- und/oder Stearylgruppen bestehende Fettalkylgruppe bedeuten, n eine Zahl von 2 bis 3 ist, die Indizes x, y, z gleich oder ungleich sind und eine Zahl von 0 bis

10 bedeuten, eingesetzt werden.

Gesättigte Phosphorsäure(partial)alkylester der allgemeinen Formel I werden vorzugsweise bei Temperaturen zwischen 20 und 120 °C, besonders bevorzugt bei Temperaturen zwischen 60 und 100 °C, vorzugsweise mit Schwefelsäure, Oleum, Chlorsulfonsäure oder $SO_3$-haltigen Gasgemischen sulfoniert. Gasgemische aus $SO_3$ und Luft oder Inertgasen, beispielsweise Stickstoff, in denen der $SO_3$-Gehalt zwischen 1 und 10. Vol.-% liegt, werden als Sulfonierungsmittel besonders bevorzugt. Das molare Verhältnis der im Edukt enthaltenen Esteräquivalente : $SO_3$ liegt vorzugsweise zwischen 100 : 5 und 100 : 180, besonders bevorzugt zwischen 100 : 10 und 100 : 160.

Die Sulfonierungen werden in üblichen, für die Sulfatierung von Fettalkoholen oder die Sulfonierung von Fettsäureestern, Alkylbenzolen oder Olefinen geeigneten und gebräuchlichen Reaktoren, bevorzugt vom Typ des Fallfilmreaktors, kontinuierlich oder diskontinuierlich durchgeführt (siehe beispielsweise in Kirk-Othmer: Encyclopedia of Chemical Technology 22, 28 ff (1983)).

Nach beendeter Sulfonierung erweist es sich in vielen Fällen als besonders günstig, das Reaktionsgemisch einem Alterungsprozeß zu unterwerfen. Zu diesem Zweck wird das Reaktionsgemisch in größer 0 bis 240 Minuten, besonders bevorzugt innerhalb von 1 bis 30 Minuten, vorzugsweise bei 10 bis 120 °C, besonders bevorzugt bei 60 bis 100 °C, stehen gelassen oder gerührt. Anschließend wird mit einer wäßrigen Lösung aus Alkalihydroxiden, Erdalkalihydroxiden, Ammoniumhydroxid und/oder Aminen oder mit wasserfreien Aminen hydrolysiert, in dem entweder das Reaktionsgemisch zu der wäßrigen Lösung oder den wasserfreien Aminen gegeben wird oder die wäßrige Lösung oder die wasserfreien Amine zu dem Reaktionsgemisch. Vorzugsweise wird das gealterte Reaktionsge misch in eine wäßrige Lösung aus Alkalihydroxiden, Erdalkalihydroxiden, Ammoniumhydroxid und/oder Aminen eingetragen, wobei pro Mol angelagertem Schwefeltrioxid 1 bis 1,5 Mol Hydroxide und/oder Amine eingesetzt werden. Die Hydroxide und/oder Amine dienen der Hydrolyse und Neutralisation des Sulfonierungsproduktes; überschüssiges Hydroxid und/oder Amin ist erforderlich, um das im Sulfonierungsprodukt gelöste gasförmige $SO_3$ zu neutralisieren. Eine Verseifung des Esters wird hierbei nicht beobachtet. Als Neutralisationsbasen eignen sich beispielsweise Natriumhydroxid, Ammoniumhydroxid, Diethanolamin, Triethanolamin und/oder Pyridin. Bevorzugt werden Natrium- und/oder Ammoniumhydroxid eingesetzt. Die Konzentration der Hydroxide und/oder Amine in Wasser wird vorzugsweise so gewählt, daß das Endprodukt eine noch fließfähige oder pumpbare wäßrige Lösung bildet.

Die nach dem erfindungsgemäßen Verfahren erhältlichen Gemische oberflächenaktiver, gesättigter Sulfophosphorsäure(partial)alkylester enthalten Verbindungen der allgemeinen Formel II

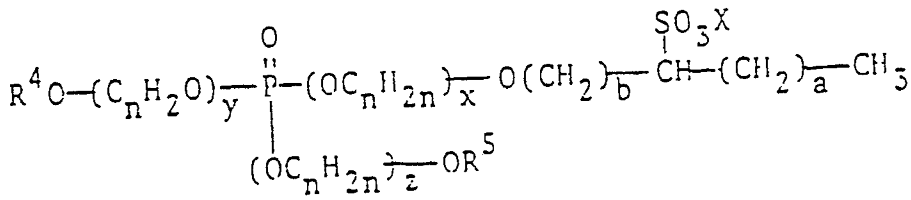

in welcher $R^4$ und $R^5$ gleich oder ungleich sind und Wasserstoff oder

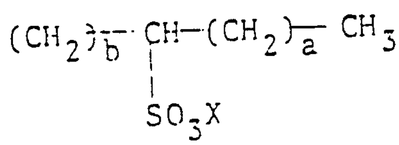

bedeuten, X Wasserstoff, Alkalimetallion, Erdalkalimetallion, Ammoniumion oder einen Aminrest darstellt, n eine Zahl von 2 bis 4 bedeutet, die Indizes x, y und z gleich oder ungleich sind und eine Zahl von 0 bis 30 bedeuten, a und b eine Zahl von 0 bis 20 bedeuten, mit der Maßgabe, daß die Summe a + b zwischen 6 und 20 liegt.

Diese Gemische oberflächenaktiver, gesättigter Sulfophosphorsäure(partial)alkylester der allgemeinen Formel II sind daher ebenfalls Erfindungsgegenstand.

Die nach dem erfindungsgemäßen Verfahren zugänglichen oberflächenaktiven, gesättigten Sulfophosphorsäure(partial)alkylester fallen als dunkle bis hellgelbe, alkalische Lösungen in Form ihrer Alkali-, Erdalkali-, Ammonium- und/oder Aminsalze an. Gewünschtenfalls können diese mit Wasserstoffperoxidlösungen oder Alkalihypochloritlösungen (Chlorlauge) in an sich bekannter Weise bei 40 bis 55 °C

gebleicht werden. Der pH-Wert dieser Lösungen kann unter Verwendung von Mineral- und/oder Carbonsäuren, beispielsweise Salzsäure, Schwefelsäure, Phosphorsäure, Citronensäure und/oder Milchsäure, neutral eingestellt werden.

Die als Edukte zum Einsatz gelangenden gesättigten Alkyl-, gesättigten Alkyl/gesättigten Alkylpolyoxyalkyl- und/oder gesättigten Alkylpolyoxyalkylphosphate der allgemeinen Formel I sind nach literaturbekannten Verfahren zugänglich. Ihre Herstellung geht aus von weitgehend gesättigten Alkoholen mit Jodzahlen zwischen 0 und kleiner 10. Es werden Alkohole mit8 bis 22 C-Atomen, beispielsweise Octyl-, Decyl-, Lauryl-, Myristyl-, Cetyl-, Stearyl- und/oder Behenylalkohol oder technische, überwiegend aus diesen Alkoholen bestehende Alkoholschnitte eingesetzt. Bei technischen Alkoholschnitten sind geringe Anteile an ungesättigten Alkoholen, beispielsweise an Palmitoleyl- und/oder Oleylalkohol, tragbar, insbesondere wenn die daraus durch Oxalkylierung hergestellten Produkte selbst wasserlöslich sind. Besonders bevorzugt werden Alkohole mit 12 bis 18 Kohlenstoffatomen oder technische, überwiegend aus Lauryl-, Myristyl-, Cetyl- und/oder Stearylalkohol bestehende Alkoholschnitte eingesetzt.

Die Oxalkylierungen gesättigter Alkohole mit Ethylenoxid, Propylenoxid und/oder Butylenoxid werden nach bekannten großtechnischen Verfahren durchgeführt (siehe beispielsweise in "Chemische Technologie" Band 7, Seite 131 - 132, Carl-Hanser-Verlag, München-Wien (1986)). Der mittlere Oxalkylierungsgrad x, y oder z der erhaltenen Gemische homologer Oxalkylate entspricht der molaren Menge der angelagerten Alkylenoxide. Die erfindungsgemäßen gesättigten Sulfophosphorsäure(partial)alkylester der allgemeinen Formel II besitzen vorzugsweise Oxalkylierungsgrade zwischen 0 und 10.

Die Phosphatierung gesättigter, gegebenenfalls oxalkylierter Alkohol erfolgt in an sich bekannter Weise ("Chemische Technologie" Band 7, Seite 123 ff, Carl-Hanser-Verlag, München-Wien (1986)), indem beispielsweise die gesättigten Alkohole und/oder gesättigten Alkoholpolyoxyalkylether mit Phosphorpentoxid oder Polyphosphorsäure umgesetzt werden. Bei diesen Verfahren werden Gemische aus Mono-, Di- und Trialkylderivaten gebildet. Unter Einsatz von Wasserschleppmitteln lassen sich solche Partialestergemische auch direkt unter Verwendung von Orthophosphorsäure erhalten. Bei Reaktionsbedingungen oberhalb von 160 °C findet hierbei jedoch keine klassische Veresterung sondern primär die Bildung von Di-und Polyphosphorsäure statt, die in bekannter Weise mit Alkoholen und/oder Alkoholpolyoxyalkylethern abreagieren. Diese drastischen Reaktionsbedingungen führen ferner zur verstärkten Bildung von Olefinen.

Zur Herstellung hochreiner Mono-, Di- und Trialkylphosphorsäureester können gesättigte Alkohole und/oder gesättigte Alkoholpolyoxyalkylether ferner mit Phosphoroxychlorid umgesetzt werden. Infolge der hohen Korrosionsbelastung bei Verwendung von Phosphoroxychlorid hat dieses Verfahren jedoch nur geringe Bedeutung.

Die nach dem erfindungsgemäßen Verfahren zugänglichen gesättigten Sulfophosphorsäure(partial)-alkylester der allgemeinen Formel II weisen eine hohe Oberflächenaktivität sowie gute anwendungstechnische Tensideigenschaften auf. Sie verfügen auch in hartem Wasser über eine hohe Schaumstabilität und erweisen sich trotz hohen Molekulargewichts als gut wasserlöslich. Besonders hervorzuheben ist ihre ausgeprägte Stabilität in hochalkalischen Medien, ihre emulgierenden Eigenschaften sowie das gute textile Netzvermögen.

## Beispiele

### 1. Herstellung gesättigter Alkylphosphate

#### 1.1 Herstellung von $C_{12/14}$-Kokosalkoholphosphat

In einem mit Rührer und Thermometer versehenen 1-l-Dreihalskolben wurden 291 g (1,5 Mol) $C_{12/14}$-Kokosfettalkohol (Lorol$^R$ Spezial von Henkel KGaA: Jodzahl = kleiner 0,3; OH-Zahl = 290) vorgelegt und erwärmt. Bei einer Temperatur von 60 - 70 °C wurde mit Hilfe eines gegen Luftfeuchtigkeit geschützten Pulverdosiergerätes gleichmäßig innerhalb von 2 Stunden 71 g (0,5 Mol) Phosphorpentoxid eingetragen. Nach einer Nachreaktionszeit von 2 Stunden bei 70 °C wurden 10 ml Wasser zugesetzt und weitere 3 Stunden bei 90 °C gerührt.

Es wurden 370 g eines farblosen Öls erhalten, das folgende Kenndaten besaß:

| | | |
|---|---|---|
| Monoalkylphosphorsäureester (Monoester) | 48,4 | Gew.-% |
| Dialkylphosphorsäureester (Diester) | 36,2 | Gew.-% |
| Trialkylphosphorsäureester (Triester) | 1,9 | Gew.-% |
| $H_3PO_4$ | 0,9 | Gew.-% |
| freier Alkohol | 12,4 | Gew.-% |
| $H_2O$ (nach Fischer) | 0,2 | Gew.-% |
| Jodzahl | <0,3 | |
| mittleres Molekulargewicht | 343 | |
| Ester-Äquivalente/Mol | 1,26 | |

1.2 Herstellung von $C_{12-18}$-Kokosalkoholphosphat

Analog Beispiel 1.1 wurden 311 g (1,5 Mol) $C_{12-18}$-Kokosfettalkohol (Lorol$^R$ Technisch von Henkel KGaA: Jodzahl = kleiner 0,5; OH-Zahl = 270) zu $C_{12-18}$-Kokosalkohol-phosphat umgesetzt. Es wurden 400 g eines hellfarbigen Öls mit folgenden Kenndaten erhalten:

| | | |
|---|---|---|
| Monoester | 43,8 | Gew.-% |
| Diester | 44,0 | Gew.-% |
| Triester | 1,8 | Gew.-% |
| $H_3PO_4$ | 0,6 | Gew.-% |
| freier Alkohol | 9,8 | Gew.-% |
| $H_2O$ (nach Fischer) | 0,1 | Gew.-% |
| Jodzahl | <0,5 | |
| mittleres Molekulargewicht | 374 | |
| Ester-Äquivalente/Mol | 1,36 | |

2. Sulfonierung von Alkylphosphaten

2.1 Sulfonierung mit 30 % $SO_3$-Überschuß

In einem 1-l-Sulfierreaktor mit Gaseinleitungsrohr und Mantelkühlung wurden 172 g (0,5 Mol) $C_{12/14}$-Kokosfettalkoholphosphat aus Beispiel 1.1 vorgelegt und bei 85 °C mit 66 g (0,82 Mol) $SO_3$ entsprechend einem auf die Ester-Äquivalente bezogenen 30 %igen Überschuß, umgesetzt. Das $SO_3$ wurde durch Erhitzen aus einer entsprechenden Menge Oleum ausgetrieben, mit Stickstoff auf eine Konzentration von 5 Vol.-% verdünnt und innerhalb von 35 Minuten in den Phosphorsäurealkylester eingeleitet, wobei die Temperatur des Reaktionsgemisches durch Kühlung auf Temperaturen unterhalb 90 °C gehalten wurde. Nach der Sulfonierung wurde das Reaktionsgemisch 10 Minuten bei 85 °C unter Rühren gealtert und anschließend in eine Lösung von 40 g (1 Mol) NaOH in 700 ml Wasser eingerührt. Nach Abkühlen auf 20 °C wurde der pH-Wert des Reaktionsgemisches durch Zugabe von HCl-Lösung auf 7,0 eingestellt.

Kenndaten des Produktes:

| | |
|---|---|
| Aniontensid (Zweiphasentitrationsmethode nach Einheitsmethode DGF-H-III-10) | 8 Gew.-% = 0,20 mval/g |
| unsulfierte Anteile (DGF-G-III-6b) | 5 Gew.% |
| Natriumsulfat | 3 Gew.-% |
| Natriumphosphat | < 0,1 Gew.-% |
| $H_2O$ (nach Fischer) | 84 Gew.-% |
| mittleres Molekulargewicht | 403 |
| Klett-Farbzahl | 154 |

Die Klett-Farbzahl wurde nach 30 minütiger Bleichung mit 5 Gew.-% einer 35 %igen Wasserstoffperoxidlösung bestimmt. Die Messung erfolgte bei einer Konzentration von 5 Gew.-% Aniontensid, pH 7 sowie unter Verwendung einer 1-cm-Küvette und einer Blaufilters (400 - 465 µ).

### 2.2 Sulfonierung mit 60 % $SO_3$-Überschuß

Analog Beispiel 2.1 wurden 80 g (1,00 Mol) $SO_3$ entsprechend einem auf Ester-Äquivalente bezogenen 60 %igen $SO_3$-Überschuß innerhalb von 41 Minuten in 172 g (0,5 Mol) $C_{12/14}$-Kokosfettalkoholphosphat aus Beispiel 1.1 eingeleitet. Die Neutralisation wurde mit 48 g (1,2 Mol) NaOH in 800 ml Wasser durchgeführt.

Das erhaltene Produkt hatte folgende Kenndaten:

| | |
|---|---|
| Aniontensid (DGF-H-III-10) | 11 Gew.-% = 0,27 mval/g |
| unsulfierte Anteile (DGF-G-III-6b) | 8 Gew.-% |
| $Na_2SO_4$ | 5 Gew.-% |
| $Na_3PO_4$ | <0,1 Gew.-% |
| $H_2O$ (nach Fischer) | 76 Gew.-% |
| mittleres Molekulargewicht | 413 |
| Klett-Farbzahl | 298 |

### 2.3 Sulfonierung bei 100 °C

Die in Beispiel 2.1 beschriebene Umsetzung wurde bei einer Sulfonierungstemperatur von 100 °C wiederholt. Das erhaltene Produkt hatte folgende Kenndaten:

| | |
|---|---|
| Aniontensid (DGF-H-III-10) | 15 Gew.-% = 0,36 mval/g |
| unsulfierte Anteile (DGF-G-III-6b) | 10 Gew.-% |
| $Na_2SO_4$ | 1 Gew.-% |
| $Na_3PO_4$ | <0,1 Gew.-% |
| $H_2O$ (nach Fischer) | 74 Gew.-% |
| mittleres Molekulargewicht | 418 |
| Klett-Farbzahl | 559 |

### 2.4 Variation der Alterungstemperatur

Die in Beispiel 2.1 beschriebene Umsetzung wurde wiederholt, wobei die Alterung des Produktes in 10 Minuten bei 100 °C durchgeführt wurde. Das erhaltene Produkt hatte folgende Kenndaten:

| | |
|---|---|
| Aniontensid (DGF-H-III-10) | 9 Gew.-% = 0,41 mval/g |
| unsulfierte Anteile (DGF-G-III-6b) | 5 Gew.-% |
| $Na_2SO_4$ | 3 Gew.-% |
| $Na_3PO_4$ | <0,1 Gew.-% |
| $H_2O$ (nach Fischer) | 81 Gew.-% |
| mittleres Molekulargewicht | 413 |
| Klett-Farbzahl | 214 |

2.5 Variation der Alterungszeit

Die in Beispiel 2.2 beschriebene Umsetzung wurde wiederholt, wobei die Alterung des Produktes in 30 Minuten bei 85 °C durchgeführt wurde. Das erhaltene Produkt hatte folgende Kenndaten:

| | |
|---|---|
| Aniontensid (DGF-H-III-10) | 8 Gew.-% = 0,41 mval/g |
| unsulfierte Anteile (DGF-G-III-6b) | 5 Gew.-% |
| $Na_2SO_4$ | 4 Gew.-% |
| $Na_3PO_4$ | <0,1 Gew.-% |
| $H_2O$ (nach Fischer) | 83 Gew.-% |
| mittleres Molekulargewicht | 413 |
| Klett-Farbzahl | 322 |

2.6 Sulfonierung von $C_{12-18}$-Kokosfettalkoholphosphat

Analog Beispiel 2.1 wurden 103 g (0,5 Mol) $C_{12-18}$-Kokosfettalkoholphosphat aus Beispiel 1.2 mit 72 g (0,88 Mol) $SO_3$ entsprechend einem auf Ester-Äquivalente bezogenen 30 %igen Überschuß umgesetzt. Das erhaltene Produkt hatte folgende Kenndaten:

| | |
|---|---|
| Aniontensid (DGF-H-III-10) | 8 Gew.-% = 0,18 mval/g |
| unsulfierte Anteile (DGF-G-III-6b) | 5 Gew.-% |
| $Na_2SO_4$ | 3 Gew.-% |
| $Na_3PO_4$ | <0,1 Gew.-% |
| $H_2O$ (nach Fischer) | 82 Gew.-% |
| mittleres Molekulargewicht | 438 |
| Klett-Farbzahl | 186 |

2.7 Neutralisation mit Ammoniumhydroxid

Die in Beispiel 2.1 beschriebene Umsetzung wurde wiederholt, wobei die Neutralisation mit 68 g (1 Mol) konzentrierter (25 %iger) Ammoniumhydroxidlösung in 200 ml Wasser in einer geschlossenen Apparatur unter Rückfluß durchgeführt wurde. Das erhaltene Produkt hatte folgende Kenndaten:

| | |
|---|---|
| Aniontensid (DGF-H-III-10) | 46 Gew.-% = 1,10 mval/g |
| unsulfierte Anteile (DGF-G-III-6b) | 18 Gew.-% |
| $Na_2SO_4$ | 8 Gew.-% |
| $Na_3PO_4$ | <0,1 Gew.-% |
| $H_2O$ (nach Fischer) | 28 Gew.-% |
| mittleres Molekulargewicht | 438 |
| Klett-Farbzahl | 76 |

2.8 Sulfonierung im Fallfilmreaktor

In einem kontinuierlich arbeitenden Fallfilmreaktor wurden 1,8 kg (5,20 Mol) $C_{12/14}$-Kokosfettalkoholphosphat aus Beispeil 1.1 bei einem Durchsatz von 10 g/min mit $SO_3$ im Molverhältnis Ester-Äquivalente : $SO_3$ = 1 : 1,3 zur Reaktion gebracht. Das erhaltene Sulfonierungsprodukt wurde anschließend kontinuierlich bei 85 °C in 10 Minuten gealtert und dann in konzentrierte Natronlauge (45 %ig) eingerührt und wie unter 2.1 beschrieben aufgearbeitet. Das erhaltene Produkt hatte folgende Kenndaten:

| | |
|---|---|
| Aniontensid (DGF-H-III-10) | 40 Gew.-% = 0,96 mval/g |
| unsulfierte Anteile (DGF-G-III-6b) | 8 Gew.-% |
| $Na_2SO_4$ | 2 Gew.-% |
| $Na_3PO_4$ | <0,1 Gew.-% |
| $H_2O$ (nach Fischer) | 50 Gew.-% |
| mittleres Molekulargewicht | 418 |
| Klett-Farbzahl | 124 |

**Ansprüche**

1. Verfahren zur Herstellung oberflächenaktiver, gesättigter Sulfophosphorsäure(partial)alkylester und deren Alkali-, Erdalkali-, Ammonium- und/oder Aminsalzen, dadurch gekennzeichnet, daß man gesättigte Alkyl-, gesättigte Alkyl/gesättigte Alkylpolyoxyalkyl- und/oder gesättigte Alkylpolyoxyalkylphosphate mit Jodzahlen zwischen 0 und kleiner 10, die der allgemeinen Formel I

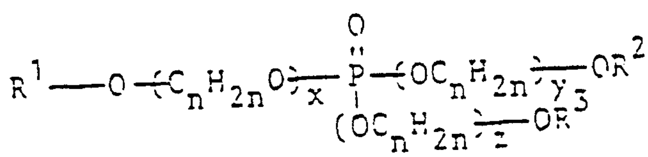

entsprechen, in welcher $R^1$ eine Alkylgruppe mit 8 bis 22 C-Atomen oder eine überwiegend aus Octyl-, Decyl-, Lauryl-, Myristyl-, Cetyl-, Stearyl- und/oder Behenylgruppen bestehende Fettalkylgruppe bedeutet, die Reste $R^2$ und $R^3$ gleich oder ungleich sind und Wasserstoff, eine Alkylgruppe mit 8 bis 22 C-Atomen oder eine überwiegend aus Octyl-, Decyl-, Lauryl-, Myristyl-, Cetyl- Stearyl- und/oder Behenylgruppen bestehende Fettalkylgruppe bedeuten, n eine Zahl von 2 bis 4 ist, die Indizes x, y , z gleich oder ungleich sind und eine Zahl 0 und 30 bedeuten, mit Sulfonierungsmitteln umsetz und anschließend die Umsetzungsprodukte mit wäßrigen Lösungen von 1 bis 1,5 Mol Alkalihydroxiden, Erdalkalihydroxiden, Ammoniumhydroxid und/oder Aminen oder mit 1 bis 1,5 Mol wasserfreien Aminen pro Mol angelagertem $SO_3$ hydrolysiert.

2. Verfahren nach Anspruch 1, dadurch gekennzeichnet, daß $R^1$ eine Alkylgruppe mit 12 bis 18 C-Atomen oder eine überwiegend aus Lauryl-, Myristyl-, Cetyl- und/oder Stearylgruppen bestehende Fettalkylgruppe bedeutet, die Reste $R^2$ und $R^3$ gleich oder ungleich sind und Wasserstoff, eine Alkylgruppe mit 12 bis 18 C-Atomen oder eine überwiegend aus Lauryl-, Myristyl-, Cetyl- und/oder Stearylgruppen bestehende Fettalkylgruppe bedeuten, n eine Zahl von 2 bis 3 ist, die Indizes y, x, z gleich oder ungleich sind und eine Zahl zwischen 0 und 10 bedeuten.

3. Verfahren nach einem oder beiden der Ansprüche 1 und 2, dadurch gekennzeichnet, daß die Sulfonierungen bei Temperaturen zwischen 20 und 120 °C, vorzugsweise bei Temperaturen zwischen 60 und 100 °C mit Oleum, Schwefelsäure, Chlorsulfonsäure oder Gemischen aus gasförmigem $SO_3$ und Luft oder Inertgasen durchgeführt werden.

4. Verfahren nach einem oder mehreren der Ansprüche 1 bis 3, dadurch gekennzeichnet, daß die Sulfonierungen mit Gasgemischen aus gasförmigem $SO_3$ und Luft oder Inertgasen durchgeführt werden mit der Maßgabe, daß der $SO_3$-Gehalt der Gasgemische zwischen 1 und 10 Vol.-% liegt.

5. Verfahren nach einem oder mehreren der Ansprüche 1 bis 4, dadurch gekennzeichnet, daß das molare Verhältnis der im Edukt enthaltenen Esteräquivalente : $SO_3$ zwischen 100 : 5 und 100 : 180, vorzugsweise zwischen 100 : 10 und 100 : 160 liegt.

6. Verfahren nach einem oder mehreren der Ansprüche 1 bis 5, dadurch gekennzeichnet, daß die sulfonierten Umsetzungsprodukte in größer 0 bis 240 Minuten bei Tempera turen zwischen 10 und 120 °C, vorzugsweise in 1 bis 30 Minuten bei Temperaturen zwischen 60 und 100 °C gealtert werden.

7. Oberflächenaktive, gesättigte Sulfophosphorsäure(partial)alkylester der allgemeinen Formel II

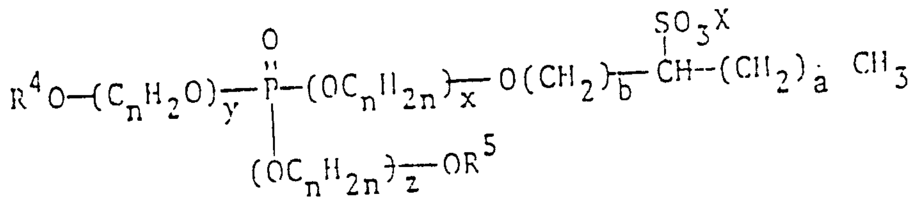

in welcher $R^4$ und $R^5$ gleich oder ungleich sind und Wasserstoff oder

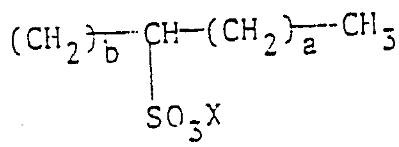

bedeuten, X Wasserstoff, ein Alkylimetallion, Erdalkylimetallion, Ammoniumion oder einen Aminrest bedeutet, n ein Zahl von 2 bis 4 darstellt, die Indizes x, y und z gleich oder ungleich sind und eine Zahl zwischen 0 und 30 bedeuten, a eine Zahl zwischen 0 und 20 ist und b eine Zahl zwischen 0 und 20 ist mit der Maßgabe, daß die Summe a + b zwischen 6 und 20 liegt, wie sie erhalten werden nach dem Verfahren gemäß einem oder mehreren der Ansprüche 1 bis 6.